# EUROPÄISCHE PATENTANMELDUNG

(11) **EP 0 729 773 A2**
(43) Veröffentlichungstag der Anmeldung: **04.09.1996**
(21) Anmeldenummer: 96102632.5
(22) Anmeldetag: 22.02.1996
(51) Int. Cl.: B01D 5/00, B01D 8/00

(54) **Verfahren zur Abtrennung organischer Dämpfe aus Luft und technischen Gasen**

(30) Priorität: 02.03.1995 DE 19507198
(71) Anmelder: Ingenieurbüro Dr. Förster, 39108 Magdeburg (DE)
(72) Erfinder: Förster, Hans, Dr., 39110 Magdeburg (DE)
(74) Vertreter: Leinung, Günter

(57) **Zusammenfassung**

Das Verfahren ist vorteilhaft anwendbar zur Abscheidung organischer Stoffe, die in Dampfform Luft- oder Gasströme belasten. Solche organischen Dämpfe treten in Raffinerien und beim Befüllen von Lagertanks für Kohlenwasserstoffe in Tanklagern usw. auf.

Aufgabe der Erfindung ist es, ein Verfahren zur Abtrennung organischer Dämpfe aus Luft und technischen Gasen anzugeben, das einstufig mit einer Kaltwäsche unter höherem Druck betreibbar ist, mit dem die organischen Wertstoffe flüssig zurückgewonnen werden und das hohe Beladungen der Luft mit gegebenenfalls hohen Anteilen leichter Komponenten und hoher Flüssigkeitsbelastung am warmen Ende der Kaltwäsche bei geringem investiven Aufwand ermöglicht.
Die Aufgabe wird mit Hilfe einer Kaltwäsche unter erhöhtem Druck gelöst, wobei zwei unterschiedliche Kältequellen zur Abkühlung von kursierenden Eigenkondensaten als Kälteträger benutzt werden und die anspruchsvollen Kälteparameter durch arbeitsleistende Entspannung der komprimierten, vorgekühlten Luft oder durch Verdampfung von flüssigem Stickstoff zur Verfügung gestellt werden.

## Beschreibung

Gegenstand der Erfindung ist ein Verfahren zur Abtrennung von organischen Dämpfen aus Luft und technischen Gasen, wobei die organischen Dämpfe als flüssige Wertstoffe gewonnen werden.
Das Verfahren ist vorteilhaft anwendbar zur Abscheidung organischer Stoffe, die in Dampfform Luft- oder Gasströme belasten. Solche organischen Dämpfe treten in Raffinerien, Chemieanlagen, Druckereien und beim Befüllen von Lagertanks für Kohlenwasserstoffe in Tanklagern auf.
Bekannt ist ein Verfahren (Offenlegungsschrift DE 4303670 A1), bei dem beladene Luft verdichtet wird und die Kondensationsleistung zur Verflüssigung der organischen Beladungen durch die bei der Nutzentspannung der Luft in einer Turbine entstehende Kälteleistung gedeckt wird. Dieses Verfahren ist einfach, es muß aber bei hoher Beladung der Luft ein erheblicher Teil der Luft zurückgeführt werden, um die erforderliche Kälteleistung aufzubringen, d.h., daß in solchen Fällen die Luftmenge des zu reinigenden Luft- oder Gasstroms den Kältebedarf nicht deckt.
Die erforderliche Luftmenge kann z.B. vierfach größer sein. Das zieht größere Energieverbräuche, größere Ausrüstungen und erhöhte Installationskosten nach sich. Deshalb ist dieses Verfahren nur für geringe Beladungen wirtschaftlich anwendbar.
Besitzen die Inhaltsstoffe der Luft größere Anteile an leichten Komponenten, gehen diese Komponenten dampfförmig über die Turbine und fallen als Kondensat nach der Entspannung an. Eine Schädigung der Entspannungsturbine und ein unerwünschter Anstieg der Temperatur nach der Entspannung mit Einschränkung der Reinheiten der Luft sind die Folge.
Aufgabe der Erfindung ist es, ein Verfahren zur Abtrennung organischer Dämpfe aus Luft und technischen Gasen anzugeben, das einstufig mit einer Kaltwäsche unter höherem Druck betreibbar ist, mit dem die organischen Wertstoffe flüssig zurückgewonnen werden und das hohe Beladungen der Luft mit gegebenenfalls hohen Anteilen leichter Komponenten und hoher Flüssigkeitsbelastung am warmen Ende der Kaltwäsche bei geringem investiven Aufwand ermöglicht.
Erfindungsgemäß wird das dadurch erreicht, daß die beladene Luft oder das beladene Gas vom Schraubenverdichter eines Kaltluftprozesses angesaugt und verdichtet wird, wobei dieser vorzugsweise mit Wassereinspritzung arbeitet und bedarfsweise hohe Druckverhältnisse ermöglicht, nach der Verdichtung eine Direktkühlung mit Wasser und anschließend eine Direktkühlung und -kondensation mit einem umlaufenden Strom des abgeschiedenen wasserfreien Eigenkondensates erfolgt, wobei der Kältebedarf der Kaltwäsche bei mäßigen Kälteparametern durch Einkopplung von Kälte einer Kaltdampf-Kälteanlage und verfügbarer Restkälte eines Kaltluft-Kälteteils und bei anspruchsvollen Kälteparametern allein durch Kälte eines Kaltluftteils gedeckt wird und leichte Komponenten gegebenenfalls "über Kopf" der Kaltwäsche gehen, wobei diese erst am Entspannungsende einer Kaltluftturbine anfallen bzw. flüssig gewonnen werden.
Bei geringen Leistungen bzw. Luft-/Gas-Mengen wird erfindungsgemäß die Turbine und ihre Kälteleistung durch Kälte von verdampfendem flüssigen Stickstoff ersetzt und das Gas nach Bedarf unter Druck gewonnen.
Für hohe Anteile an leichten Komponenten ist die Kaltentnahme des Flüssigprodukts der Obersäule an deren unteren Ende vorgesehen, so daß eine Wiederverdampfung der leichten Komponenten und deren Anreicherung in der Untersäule nicht möglich ist.
Die Einkopplung von Kälte mäßiger Parameter in der Untersäule der Kaltwäsche berücksichtigt den erhöhten Kältebedarf dieser Zone infolge mengenmäßig hohen Anteils ausgeschiedener Kondensate und unterstützt den Transport von Eiskristallen durch verbesserte Spülwirkung in die unteren wärmeren Zonen, in denen das Eis wieder schmilzt und die aufsteigende Dampfphase vorkühlt.
Durch den gewählten Druck kann die Abscheidung der organischen Dämpfe beeinflußt werden. Höhere Drücke unterstützen die Ausscheidung von organischen Bestandteilen und liefern gleichzeitig Kaltluft tieferer Temperatur auf Grund des höheren Enthalpiegefälles. D.h., es steht mehr Kälte bei anspruchsvolleren Parametern zur Verfügung, so daß eine Rückführung von Reinluft und deren Zumischung zur beladenen Luft in der Regel verzichtbar ist.
Der Druck wird abhängig von der Analyse der organischen Belastungen vorzugsweise zwischen 3 und 10 bar gewählt. Die Temperatur auf der Druckseite der Turbine liegt zwischen -30 und -100 °C; am Ende der Entspannung zwischen - 80 und -160 °C, je nach Art und Siedebereich der organischen Inhaltsstoffe der Luft bzw. des technischen Gases.

Die energetischen Vorteile des erfindungsgemäßen Verfahrens beruhen hauptsächlich auf dem Verzicht der Zumischung von Reinluft zur beladenen Luft bzw. zum beladenen Gas, d.h., die zu verdichtende Luft/Gas-Menge stellt ein Minimum dar.
Gleichzeitig wird die Abscheidung leichtsiedender Komponenten durch höheren Druck und durch eine Kaltwäsche mit Entnahme ermöglicht. Durch Erhöhung der Rieseldichte im Bereich mäßiger Kälteparameter wird der Transport sich bildender Eiskristalle in der nichtgefrierenden Kälteträgermenge verbessert und damit einer Verstopfungsgefahr entgegengewirkt.
Durch die Möglichkeit der Entgasung der Kälteträgerströme ist das Verfahren auch für sehr leichte organische Inhaltsstoffe bei relativ geringen Investitionskosten anwendbar.

Das Verfahren wird an Hand von fünf schematischen Zeichnungen beschrieben.
- Fig. 1: zeigt die Ausführung für organische Inhaltsstoffe der Luft bzw. des Gases ohne großen Mengenanteil leichtsiedender Komponenten.
- Fig. 2: zeigt die Ausführung für organische Inhaltsstoffe der Luft bzw. des Gases mit großem Mengenanteil an leichtsiedenden Komponenten. Unter leichtsiedenden Komponenten werden organische Verbindungen mit 2 oder 3 C-Atomen verstanden.
- Fig. 3: zeigt eine Ausgestaltung des Verfahrens, bei der die Vorwäsche durch einen Abscheider und einen Oberflächenwärmeübertrager mit indirektem Wärmetausch ersetzt ist und der Kälteträger der Obersäule entgast wird.
- Fig. 4: zeigt eine Modifikation des erfindungsgemäßen Verfahrens, bei der der gesamte umlaufende Kälteträger entgast wird und der Kälteträger der Obersäule der Kaltwäsche durch einen Kaltspeicher für stark schwankenden Kältebedarf angepaßt ist.
- Fig. 5: zeigt eine Modifikation des erfindungsgemäßen Verfahrens für kleine Leistungen bzw. kurze Betriebszeiten, bei der die Kälteleistung durch verdampfenden flüssigen Stickstoff zur Verfügung gestellt wird.

Die mit organischen Dämpfen beladene Luft 1 wird in einem Schraubenverdichter 2 mit Flüssigkeitseinspritzung (vorzugsweise Wasser) verdichtet und in einer Vorwäsche 4 mit dem Kühlmedium 3 nachgekühlt. Das abgeschiedene Sumpfprodukt 5, daß auch Anteile der organischen Begleitstoffe der Luft enthält, wird in einem Kühler 6 gekühlt, organische Bestandteile, z.B. Benzin in einem Abscheider 7 vom Kühlmedium 3 abgetrennt und als Wertstoff 8 abgegeben. Das Kühlmedium 3 wird zur beschriebenen Verwendung für die Einspritzung in den Schraubenverdichter 2 und zur Nachkühlung in die Vorwäsche 4 zurückgeführt. Die weitere Prozeßführung ist abhängig von der Analyse der Luft-Begleitstoffe und der Leistung der Anlage.

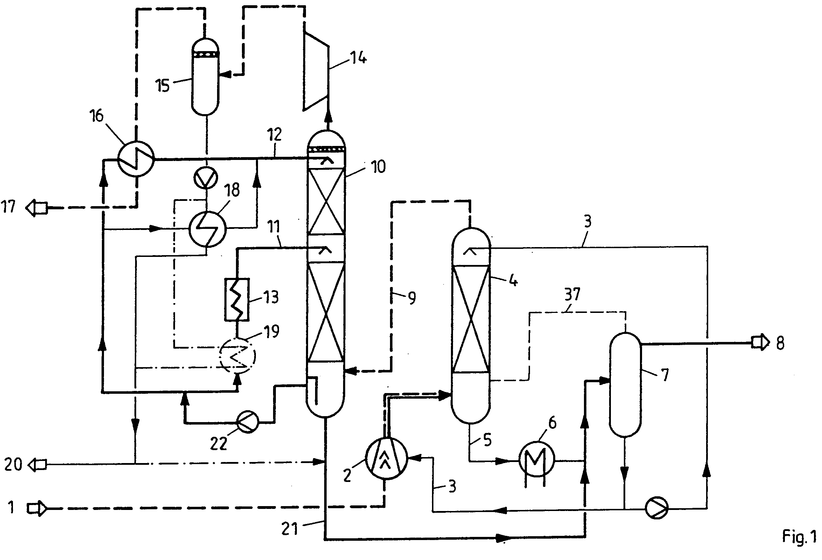

Nach Fig. 1 wird für organische Dämpfe mit geringem Anteil an leichtsiedenden Komponenten der vorgekühlte Luftstrom 9 in einer Kaltwäsche 10 mit dem vorgekühlten organischen Eigenkondensat als Kälteträger 11, 12 gewaschen, das im Sumpf der Kaltwäsche 10 abgezogen wird. Der Kälteträgerstrom 11 deckt den Kältebedarf der Untersäule bei mäßigen Kälteparametern und wird durch eine Fremdkältequelle 13, z.B. einer Kaltdampf-Kälteanlage abgekühlt. In der Untersäule der Kaltwäsche 10 wird bei hoher Beladung die Hauptmenge an organischen Dämpfen einschließlich Wasserdampf kondensiert.
Der Kälteträger 12 deckt den Kältebedarf der Obersäule der Kaltwäsche 10, in der Restbeladungen und niedrigsiedende Komponenten abgeschieden werden und fließt als weiterer Kälteträgerstrom 11 der Untersäule der Kaltwäsche 10 zu. Der Kältebedarf der Obersäule der Kaltwäsche 10 wird durch Kaltluft gedeckt, die durch Entspannung der gereinigten, komprimierten Luft in einer Entspannungsturbine 14 anspruchsvolle Kälteparameter unter -100 °C liefert. Die Kaltluft nach der Entspannungsturbine 14 wird über einen Abscheider 15 zu einem Wärmeübertrager 16 geleitet, in dem der Kälteträger 12 abgekühlt und die Reinluft 17 auf Umgebungstemperatur vorgewärmt wird.
Leichte Kondensate, die noch in geringen Mengen im Abscheider 15 anfallen können, werden auf höheren Druck gebracht und deren Kälte-Inhalt in einem Wärmeübertrager 18 oder einem Wärmeübertrager 19 zur Kühlung oder Vorkühlung von Kälteträgerströmen herangezogen, wofür auch andere Schaltungen denkbar sind. Die im Abscheider 15 anfallenden Kondensate stellen tiefsiedende, leichte Produkte 20 dar, die separat gewonnen oder dem Hauptstrom 21 der abgeschiedenen Kondensate einschließlich Wasser zugemischt werden können.
Der Umlauf der wasserfreien Kälteträgerströme 11 und 12 erfolgt durch die Umlaufpumpe 22. Die Überschußmenge des Produkthauptstromes 21 des gewinnbaren Wertstoffes einschließlich der Wasseranteile wird zum Abscheider 7 geführt und der organische Wertstoff 8 nach Abtrennung des Wassers im Abscheider 7 gewonnen. Das Wasser geht in den Kreislauf zurück, das Überschußwasser wird anderweitig genutzt.

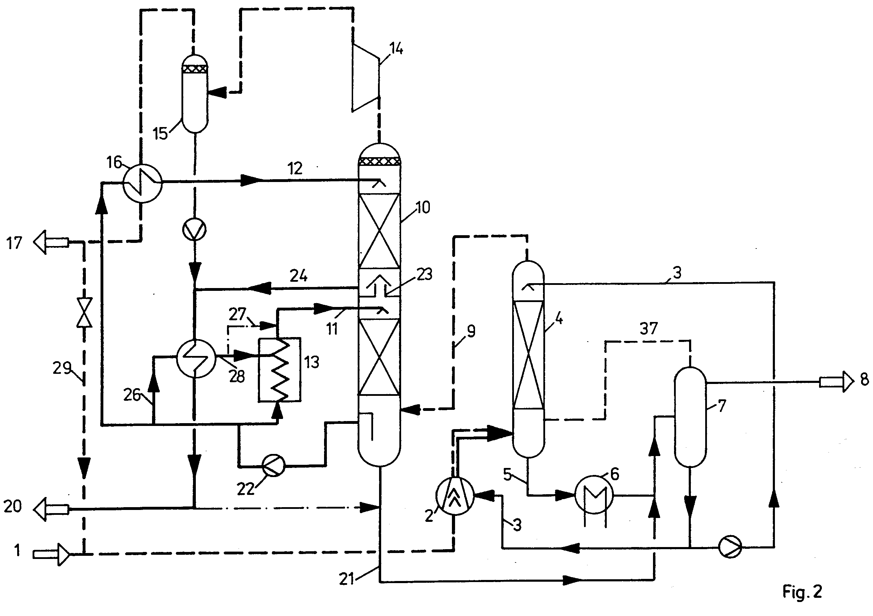

Nach Fig. 2 können organische Begleitstoffe der Luft mit hohem Anteil an leichtsiedenden Komponenten dadurch gewonnen und die beladene Luft gereinigt werden, daß die leichten Produkte als Entnahmeprodukt 24 unterhalb der Obersäule der Kaltwäsche 10 auf einem Entnahmeboden 23 kalt entnommen werden und nach Abgabe ihres Kältevorrates an einen abzukühlenden Kälteträgerstrom 26 des Kälteträgers in einem Wärmeübertrager 25 als leichtes Produkt 20 separat gewonnen oder mit dem in der Vorwäsche 4 ausgeschiedenen Strom organischer Produkte vereinigt, im Abscheider 7 von Wasser getrennt und als Wertstoff 8 abgegeben werden. Der regenerativ vorgewärmte Kälteträgerstrom 26 wird entweder nach der Fremdkältequelle 13 als Kälteträgerstrom 27 zum Kälteträger 11 zugemischt oder der Fremdkältequelle 13 am kalten Ende als nachzukühlender Teilstrom des Kälteträgerstroms 28 zugeführt. Die im Abscheider 15 anfallenden geringen Mengen an leichten Kondensaten werden auch nach der Verfahrensvariante nach Fig. 2 auf höheren Druck gebracht und ihr Kältevorrat genutzt, wobei im einfachsten Fall eine Zumischung zum Entnahmeprodukt 24 erfolgen kann, dessen Kältevorrat, wie beschrieben, im Wärmeübertrager 25 genutzt wird. Andere Schaltungen sind möglich.

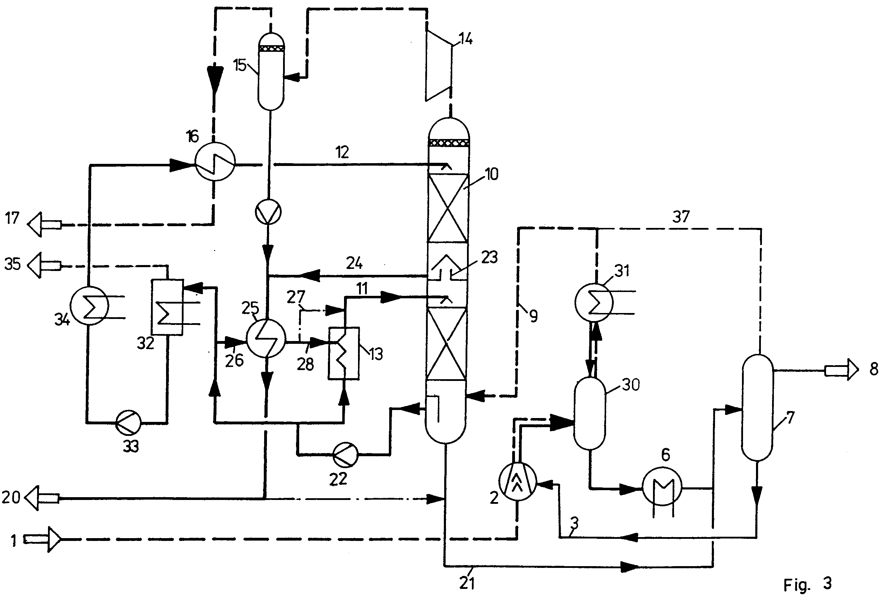

Fig. 3 zeigt eine besondere Ausgestaltung des erfindungsgemäßen Verfahrens, bei der die Vorwäsche 4 durch einen Abscheider 30 und einen nachgeschalteten Oberflächenkühler 31 ersetzt ist und der Kälteträgerstrom 12 der Obersäule der Kaltwäsche 10 vor der Abkühlung im Wärmeübertrager 16 in einem Entgaser 32 durch Entspannung und gegebenenfalls thermisch entgast wird, bevor der entgaste Kälteträgerstrom 12 über die Pumpe 33 und den Kühler 34 zum Wärmeübertrager 16 geführt wird.

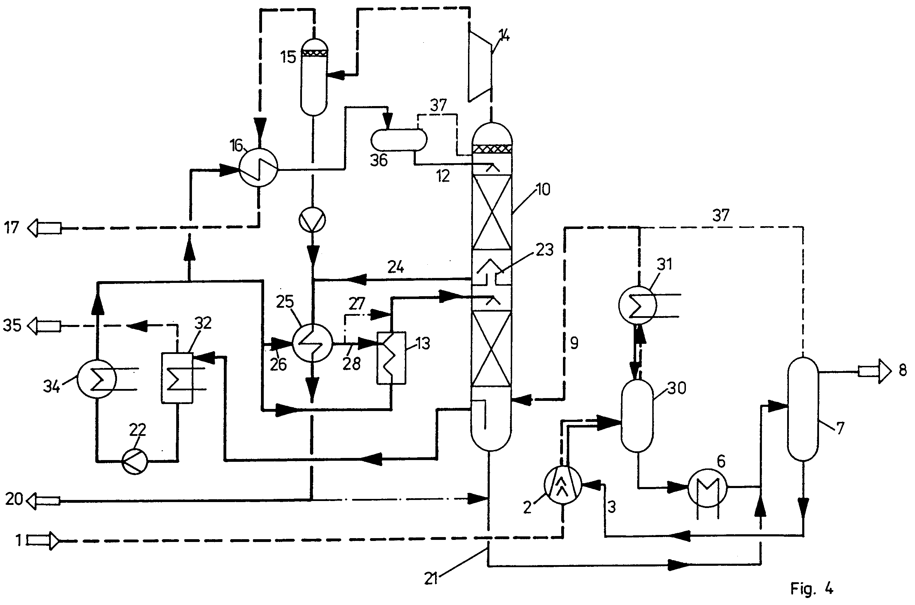

Fig. 4 zeigt eine weitere Variante, bei der im Unterschied zur Variante nach Fig. 3 der gesamte am warmen Ende der Kaltwäsche 10 anfallende Teilstrom organischer Kondensate in einem Entgaser 32 durch Entspannung oder gegebenenfalls thermisch entgast wird, so daß eine Pumpe vor der Entgasung nicht erforderlich ist und erst das entgaste Kondensat über die Umlaufpumpe 22 auf höheren Druck gebracht, anschließend über den Kühler 34 sowie durch drei Kältequellen (Fremdkältequelle 13, Wärmeübertrager 25 und 16) unterkühlt wird, wobei bedarfsweise der Kälteträger 12 der Obersäule der Kaltwäsche 10 in einem Kaltspeicher 36 bevorratet und damit die Spitzenbedarfsdeckung realisiert wird.

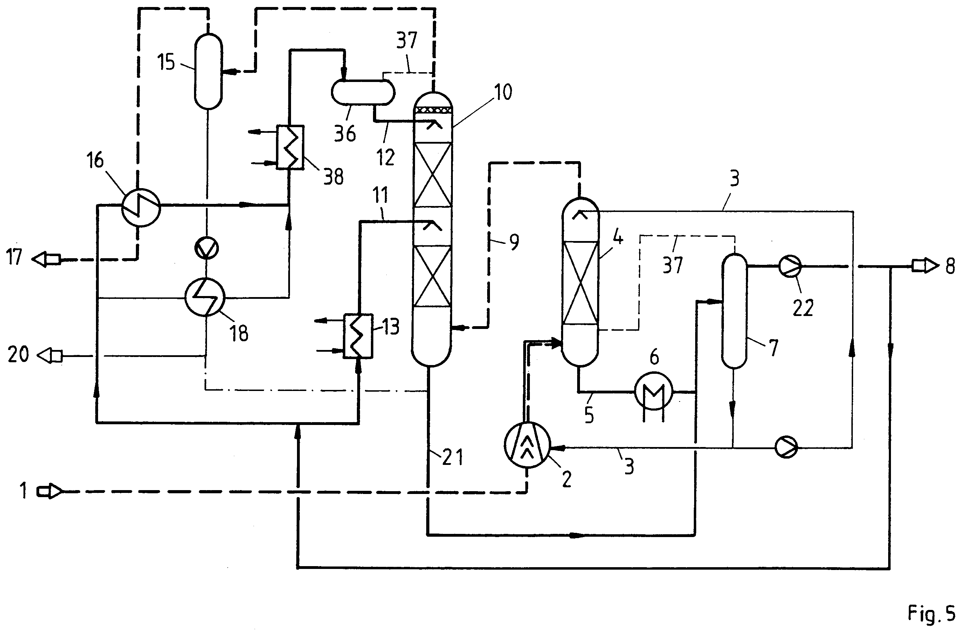

Fig. 5 zeigt eine weitere Ausgestaltung des erfindungsgemäßen Verfahrens für kleine Leistungen, also geringe Mengen belasteter Luft/bzw. technischer Gase bzw. für geringe zeitliche Nutzung der Anlage. Dabei kann die Kälteleistung einer Luft-/Gasentspannungsturbine 14 durch die Kälteleistung eines Verdampfers 38 für flüssigen Stickstoff ersetzt werden, wodurch sich die festen Kosten verringern. Eine solche technische Lösung bietet sich besonders dann an, wenn die Reinluft unter Druck zur Verfügung stehen soll und eine Entspannung somit unerwünscht ist.

### Bezugszeichenliste

- 1: Beladenes Gas
- 2: Schraubenverdichter
- 3: Kühlmedium
- 4: Vorwäsche
- 5: Sumpfprodukt
- 6: Kühler
- 7: Abscheider
- 8: Wertstoff
- 9: Luftstrom
- 10: Kaltwäsche
- 11, 12: Kälteträgerströme
- 13: Fremdkältequelle
- 14: Entspannungsturbine
- 15: Abscheider
- 16: Wärmeübertrager
- 17: Reinluft
- 18, 19: Wärmeübertrager
- 20: leichtes Produkt
- 21: Produkthauptstrom
- 22: Umlaufpumpe
- 23: Entnahmeboden
- 24: Entnahmeprodukt
- 25: Wärmeübertrager
- 26, 27, 28: Kälteträgerströme
- 29: Rückführleitung
- 30: Abscheider
- 31: Oberflächenkühler
- 32: Entgaser
- 33: Pumpe
- 34: Kühler
- 35: Gas
- 36: Kaltspeicher
- 37: Gaspendelleitung
- 38: Verdampfer

## Patentansprüche

1. Verfahren zur Abtrennung organischer Dämpfe aus Luft und technischen Gasen durch Kondensation unter erhöhtem Druck und anspruchsvollen Kälteparametern mit Hilfe einer Kaltwäsche, wobei die organischen Begleitstoffe als flüssige Wertstoffe gewonnen werden und das beladene bzw. hochbeladene Gas in einem Schraubenverdichter mit Wassereinspritzung nahezu isotherm verdichtet und in einer Vorwäsche durch Wasser vorgekühlt wird, **dadurch gekennzeichnet**, daß in einer an sich bekannten Kaltwäsche (10) der vorgekühlte Luftstrom (9) durch zwei Kälteträger (11), (12) als umlaufende Ströme des Eigenkondensates der Luftinhaltsstoffe in 2 Stufen auf anspruchsvoll tiefe Temperatur gekühlt wird, wobei die organischen Inhaltsstoffe durch Direktkondensation ausgeschieden werden und der Kälteträger (11) die Kälteleistung bei mäßigen Kälteparametern mit Hilfe einer Fremdkältequelle (13) einbringt, während der Kälteträger (12) Kälte mit sehr anspruchsvollen Kälteparametern zur Verfügung stellt., die in einem Wärmeübertrager (16) an den Kälteträger (12) übertragen wird, wobei im Abscheider (15) ggf. noch ausfallendes Restkondensat auf höheren Druck gebracht und dessen Kälte-Inhalt in einem weiteren Wärmeübertrager (18 oder 19) genutzt und das Kondensat als leichtes Produkt (20) abgegeben oder zum Produkthauptstrom (21) zugemischt und schließlich als wasserfreier Wertstoff (8) abgenommen wird.

2. Verfahren nach Anspruch 1, **dadurch gekennzeichnet,** daß die Kälte für den Kälteträger (12) durch Entspannung der verdichteten und vorgekühlten Kaltluft in einer Entspannungsturbine (14) gewonnen wird.

3. Verfahren nach Anspruch 1, **dadurch gekennzeichnet,** daß der Kältebedarf für den Kälteträger (12) durch verdampfenden Flüssigstickstoff gedeckt wird.

4. Verfahren nach Anspruch 1 bis 3, **dadurch gekennzeichnet,** daß in der Kaltwäsche (10) ein Entnahmeboden (23) vorgesehen ist, über den das Entnahmeprodukt (24), das den Hauptteil der leichten Komponenten enthält, kalt abgenommen und dessen Kälte-Inhalt in einem Wärmeübertrager (25) zur Vorkühlung des Kälteträgerstromes (26) verwendet wird, der nach Abkühlung als Kälteträgerstrom (27) dem Kälteträgerstrom (11) nach der Fremdkältequelle (13) zugemischt oder am kalten Ende des Rohrsystems der Fremdkältequelle (13) eingespeist wird, während die im Abscheider (15) anfallenden Kondensate nach Druckerhöhung in einem Wärmeübertrager einen Teilstrom des Kälteträgers (12) abkühlt oder zum kalten Entnahmeprodukt (24) vor dem Wärmeübertrager (25) zugespeist wird und die Menge des leichten Produkts (20) vergrößert, die alternativ mit dem in der Vorwäsche (4) anfallendem Sumpfprodukt (5) vereinigt wird und in diesem Fall die Menge des Wertstoffs (8) vergrößert.

5. Verfahren nach Anspruch 1 bis 4, **dadurch gekennzeichnet,** daß die Vorkühlung durch einen Abscheider (30) und einen Oberflächenkühler (31) erfolgt und der Kälteträgerstrom (12) der Obersäule der Kaltwäsche (10) vor der Abkühlung im Wärmeübertrager (16) in einem Entgaser (32) durch Entspannung oder ggf. thermisch entgast wird, bevor dieser Teilstrom des Kälteträgers (12) über eine Pumpe (33) und den Kühler (34) zum Wärmeübertrager (16) gefördert wird.

6. Verfahren nach Anspruch 1 bis 5, **dadurch gekennzeichnet**, daß der gesamte im Sumpf der Kaltwäsche (10) anfallende umlaufende Strom organischer Kondensate in einem Entgaser (32) durch Entspannung und/oder thermisch entgast wird und zwischen dem Sumpf der Kaltwäsche (10) und dem Entgaser (32) eine Pumpe nicht erforderlich ist, wobei das entgaste Kondensat als Kälteträger über die Umlaufpumpe (22) und den Kühler (34) auf die vorhandenen Kältequellen (Fremdkältequelle 13, Wärmeübertrager 25 und Wärmeübertrager 16) verteilt wird und bedarfsweise der Kälteträger (12) der Obersäule der Kaltwäsche (10) in einem Kaltspeicher (36) bevorratet wird.
